# EUROPÄISCHE PATENTSCHRIFT

(11) **EP 3 066 286 B1**
(45) Veröffentlichungstag und Bekanntmachung des Hinweises auf die Patenterteilung: **03.07.2019**
(21) Anmeldenummer: 14795627.0
(22) Anmeldetag: 06.11.2014
(51) Int. Cl.: E06B 7/28

(54) **ZERSTÖRUNGSFREIE BEFESTIGUNGSTECHNIK**
NON-DAMAGING FASTENING TECHNOLOGY
TECHNIQUE DE FIXATION NON DESTRUCTIVE

(30) Priorität: 07.11.2013 DE 102013018738
(43) Veröffentlichungstag der Anmeldung: 14.09.2016
(73) Patentinhaber: Höss, Matthias, 81539 München (DE); Deutsche Post AG, 53113 Bonn (DE)
(72) Erfinder: HÖSS, Matthias, 81539 München (DE)
(74) Vertreter: Cohausz & Florack
(86) Internationale Anmeldenummer: PCT/EP2014/073969
(87) Internationale Veröffentlichungsnummer: WO 2015/067714

(56) Entgegenhaltungen:
- DE-A1-102007 008 667
- GB-A- 2 458 823
- US-A- 1 617 670

## Beschreibung

### Gebiet der Erfindung

Die vorliegende Erfindung bezieht sich auf eine Befestigungsvorrichtung, und genauer auf eine Wohnungstür oder Haustür, an der zerstörungsfrei, ohne die Tür zu beschädigen, abschließbare temporär oder dauerhaft Boxen und Kästen montiert werden können und so gegen Entwendung geschützt werden.

### Beschreibung des verwandten Standes der Technik

Bei Standard Montagen von abschließbaren Boxen und Kästen werden entweder in die Tür und/oder Türrahmen und/oder Wand Nägel oder Schrauben eingebracht, um diesen dann mit den Boxen oder Kästen zu verbinden, um eine Entwendung zu verhindern.

Die FR 2 814 191 A1 betrifft einen Paketkasten zum sicheren Lagern von Lieferungen. Bei dem Paketkasten handelt es sich um einen starren Kasten der mittels eines Stabes an einer Tür befestigt werden kann. Dazu ist der Stab über drei Bänder mit dem Kasten verbunden, wobei die Verbindungsbänder an drei vertikal beabstandeten Punkten an dem Kasten befestigt sind.

### Zusammenfassung der Erfindung

Gemäß der Erfindung wird ein System offenbart, das Folgendes umfasst:
- einen zu sichernden Gegenstand, der flexibel, also nicht starr ausgebildet ist, und
- eine Vorrichtung einer vor Entwendung geschützten zerstörungsfreien Befestigung des zu sichernden Gegenstandes durch werkzeuglose Montage an einer Tür- und Türrahmen-Konstruktion, wobei die Vorrichtung mindestens ein flexibles Sicherungsband umfasst, welches dergestalt ausgebildet ist, dass es auf einer Seite an dem zu sichernden Gegenstand fixierbar oder fixiert ist, dass es zwischen Tür und Türrahmen hindurchgeführt werden kann und dass es auf der anderen Seite dergestalt fixierbar ist, dass es bei zugezogener Tür nicht durch den Türspalt gezogen und der zu sichernde Gegenstand somit nicht entfernt werden kann.

Gemäß der Erfindung wird ferner ein Verfahren offenbart, das die folgenden Schritte umfasst:
- Befestigen eines zu sichernden Gegenstandes, der flexibel, also nicht starr ausgebildet ist, an einer Tür- und Türrahmen-Konstruktion durch werkzeuglose Montage mit einer Vorrichtung, die mindestens ein flexibles Sicherungsband umfasst, das auf einer Seite an dem zu sichernden Gegenstand fixierbar oder fixiert ist, das Befestigen umfassend:
   - Hindurchführen des Sicherungsbands zwischen Tür und Türrahmen, und
   - Zuziehen der Tür,
   wobei das Sicherungsband auf der anderen Seite dergestalt fixiert ist, dass es bei zugezogener Tür nicht durch den Türspalt gezogen und der zu sichernde Gegenstand somit nicht entfernt werden kann.

In der konventionellen Befestigungstechnik wird auf Grund von Schrauben und/oder Nägel immer eine Beschädigung der Tür und /oder Türrahmen auftreten so das eine zerstörungsfreie entwendungsgeschützte Montage nicht möglich ist.

Die vorliegende Erfindung hat zum Gegenstand, ein Montagesystem bereit zu stellen, das weder Tür noch den Türrahmen beschädigt.

Die vorliegende Erfindung hat weiterhin zum Gegenstand, eine schnelle werkzeuglose Montage zu ermöglichen, eine schnelle werkzeuglose Demontage zu ermöglichen, sie kann jederzeit auf- und abgebaut werden.

Eine Montage gemäß der vorliegenden Erfindung, die an eine Tür angebracht ist, schließt ein: mindestens ein flexibles Halte- und Sicherungsband oder auch als geteiltes Band, es kann aus Faserwerkstoffen oder als flexibles Metallband ausgeführt sein oder als vorgeformtes Metall oder Kunststoffteil / Folie sein, an einem Ende des Bandes stellt es eine Möglichkeit bereit, eine Verkeilung oder Fixierung zu ermöglichen und ein Rückziehen zu unterbinden, am anderen Ende steht eine variable Befestigungsmöglich bereit, um die Gegenstände zu befestigen, die entwendungsgeschützt werden sollen. Die Materialstärke kann variabel je nach Einsatzziel variiert werden.

### Andere Ausführungsformen

(a) In der zuvor beschriebenen Ausführungsform wird die vorliegende Erfindung unter Verwendung eines Türrahmen mit Türblatt als Beispiel beschrieben, aber die vorliegende Erfindung kann auf einen Fensterrahmen mit zu öffnendem Fenster oder Wand oder Boden-Durchgang mit verschließbaren Deckel / Türen angewendet werden.
(b) In der oben beschrieben Ausführungsform wird die vorliegende Erfindung beschrieben unter der Annahme, dass die Verklemmung mit einem Sicherungsstab 11 mit dem Band 6, nach Türrahmen 9 dem Band 6 zwischen Türblatt 2 und Türrahmen 9, und der Box 8 mit Band 6 verbunden wird. Möglich sind auch alle andern Seiten der Tür, die die Durchführung des Bandes 6 je nach Platz und Aufstellort zulassen.
(c) In der zuvor beschriebenen Ausführungsform wird die vorliegende Erfindung unter Verwendung eines Sicherungsstifts beschrieben, um eine Verklemmung / Verankerung herbeizuführen, aber die Verklemmung / Verankerung der vorliegende Erfindung kann auch mit verdicktem Band ende 6 herbeigeführt werden, entscheidend hierfür ist nur dass das Ende des Bandes dicker ist als der Türspalt zwischen Türrahmen 9 und Türblatt 2 bei geschlossener Tür und so ein Zurückziehen des Bandes 6 bei geschlossen Tür 2 im Türrahmen 9 ausgeschlossen ist.

### Kurze Beschreibung der Zeichnungen

Fig. 1 ist eine Seitenansicht eines Türrahmens mit eingesetzter Tür, es zeigt die Verwendung des hindurchgeführten Bandes durch den Türspalt mit eingeführtem Sicherungsstab und der Befestigung des Bandes am zu sichernden Gegenstand.
Fig. 2 ist eine Draufsicht von oben eines Türrahmens mit eingesetzter Tür, das Band mit Sicherungsstab und den zu sichernden Gegenstand, das hindurchgeführte Band durch den Türspalt. Es zeigt die Funktion des Rückzugschutzes; der Gegenstand kann nicht bei geschlossener Tür entfernt werden.

### Detaillierte Beschreibung der bevorzugten Ausführungsformen

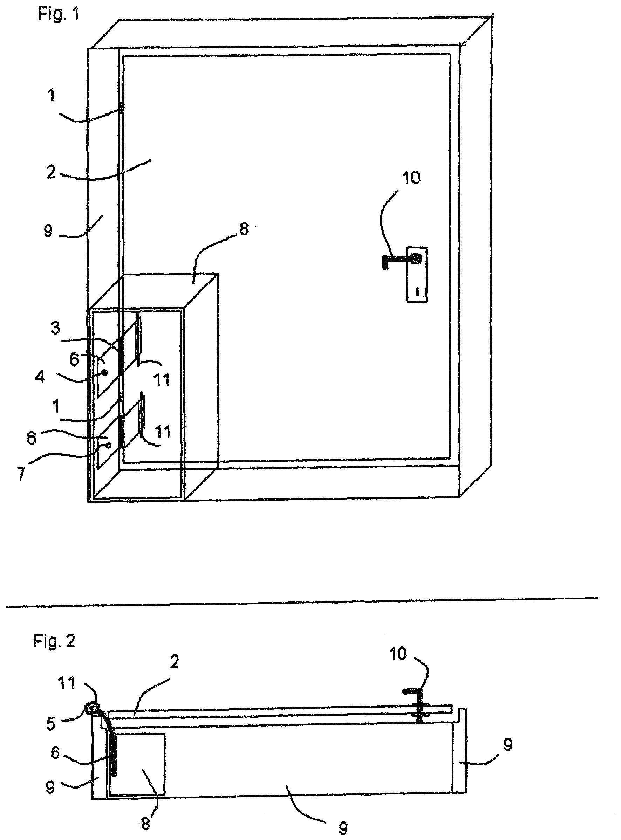

In Fig. 1 umfasst einen Türrahmen 9 mit Türblatt 2 und einer Box/Kasten 8, das eine Ausführungsform der vorliegenden Erfindung verwendet, der Türrahmen 9 hält mit den Scharnieren 1, 5 das Türblatt 2 fest, so das diese Tür ganz normal zu öffnen ist, wenn der Türöffner 10 betätigt wird. Der zu sichernde Gegenstand 8 wird mit dem Band 6 fest mittels Schrauben, Nägeln oder Klammern 4, 7 verbunden. Das andere Ende des Bandes wird durch den Türspalt 3 zwischen Rahmen 9 und Türblatt 2 hindurchgeführt und auf der anderen Seite gegen Zurückziehen gesichert durch Einfügen eines Sicherungsstabes 11 oder Befestigen eines Gegenstandes am Ende des Bandes, der dicker als der Türspalt zwischen 2 und 9 ist, Fig. 2. Solange der Sicherungsstab 11 eingeschoben ist, kann der Gegenstand 8 nicht entfernt werden.

### Bezeichnungsliste

- 1: Tür-Scharniere
- 2: Türblatt
- 3: Durchführung
- 4, 7: Muster Fixierungsstelle am Band
- 5: Halte- und Sicherungs- Band (Schlaufe zum Einführen des Stabes)
- 6: Halte- und Sicherungs- Band
- 8: Muster Gegenstand (Box)
- 9: Türrahmen
- 10: Türöffner
- 11: Sicherungsstab-/ Stift

Offenbart werden ferner folgende beispielhafte Ausführungsformen, deren Merkmale die in den Ansprüchen 1 und 11 definierte Erfindung ergänzen können, soweit sie nicht im Widerspruch dazu stehen:
Ausführungsform 1: Vorrichtung einer vor Entwendung geschützten zerstörungsfreien Befestigung eines zu sichernden Gegenstandes (8) an einer Tür- (2) und Türrahmen- (9) Konstruktion, umfassend: mindestens ein Sicherungsband (6), welches auf einer Seite an dem zu sichernden Gegenstand (8) fixierbar ist, welches zwischen Tür (2) und Türrahmen (9) hindurchgeführt werden kann und welches auf der anderen Seite dergestalt fixierbar ist, dass es bei zugezogener Tür nicht durch den Türspalt gezogen und der zu sichernde Gegenstand (8) somit nicht entfernt werden kann. Ausführungsform 2: Vorrichtung nach Ausführungsform 1, wobei der zu sichernde Gegenstand (8) aus Metall, Kunststoff oder Kunstfaser und als Kiste, Box, Regal oder als Auffangvorrichtung ausgeführt ist.
Ausführungsform 3: Vorrichtung nach einer der Ausführungsformen 1-2, wobei der zu sichernde Gegenstand (8) starr oder flexibel ausgeführt ist.
Ausführungsform 4: Vorrichtung nach einer der vorherigen Ausführungsformen, wobei der zu sichernde Gegenstand (8) abschließbar ist.
Ausführungsform 5: Vorrichtung nach einer der vorherigen Ausführungsformen, wobei der zu sichernde Gegenstand (8) auf dem Boden vor der Tür (2) aufgestellt ist.
Ausführungsform 6: Vorrichtung nach einer der vorherigen Ausführungsformen, wobei das Sicherungsband (6) durch Schrauben, Kleben, Verschweißen, Klammern, Nageln und/oder direktes Einarbeiten in den zu sichernden Gegenstand (8) an dem zu sichernden Gegenstand (8) fixierbar ist.
Ausführungsform 7: Vorrichtung nach Ausführungsform 6, wobei die Fixierung des Sicherungsbands (6) an dem zu sichernden Gegenstand (8) fest, beweglich oder abnehmbar ausgeführt ist.
Ausführungsform 8: Vorrichtung nach einer der vorherigen Ausführungsformen, wobei das Sicherungsband (6) flexibel ist.
Ausführungsform 9: Vorrichtung nach einer der vorherigen Ausführungsformen, wobei das Sicherungsband (6) aus Faserwerkstoff, als flexibles Metallband, als vorgeformtes Metall oder als Kunststoffteil oder Folie ausgeführt ist.
Ausführungsform 10: Vorrichtung nach einer der Ausführungsformen 1-8, wobei das Sicherungsband (6) ausgeführt ist als flexibles, reißfestes Faserband oder Gewebeband, als reißfeste Folie, als flacher Werkstoff aus Kunststoff, Metall oder Verbundwerkstoff, oder als dünnes flexibles oder starres Sicherungskabel aus Kunststoff, Metall oder Verbundwerkstoff.
Ausführungsform 11: Vorrichtung nach einer der vorherigen Ausführungsformen, wobei das Sicherungsband (6) mit einem Sicherungsstab oder -stift (11), einer Schlinge, einem am Ende des Sicherungsbands (6) befestigbaren Gegenstand oder einem verdickten Ende des Sicherungsbands (6) auf der anderen Seite fixierbar ist, so dass es bei zugezogener Tür nicht durch den Türspalt gezogen werden kann.
Ausführungsform 12: Vorrichtung nach Ausführungsform 11, wobei der Sicherungsstab oder -stift (11), der am Ende des Sicherungsbands (6) befestigbare Gegenstand oder das verdickte Ende des Sicherungsbands (6) dicker sind als der Türspalt. Ausführungsform 13: Vorrichtung nach einer der Ausführungsformen 11-12, wobei der Sicherungsstab oder -stift (11) in das Sicherungsband (6) einführbar ist.
Ausführungsform 14: Vorrichtung nach Ausführungsform 11, wobei die Schlinge um einen Türgriff (10) gelegt werden kann.
Ausführungsform 15: Vorrichtung nach Ausführungsform 11, wobei der Gegenstand am Ende des Sicherungsbands (6) durch Schrauben, Kleben, Verdicken, Verschweißen, Klammern, Nageln, direktes Einarbeiten eines Gegenstands oder Anbringen von Haken befestigbar ist.
Ausführungsform 16: Vorrichtung nach einer der vorherigen Ausführungsformen, wobei das Sicherungsband so ausgebildet ist, dass es zumindest an einer vertikalen Seite der Tür (2) zwischen der Tür (2) und dem Türrahmen (9) hindurchgeführt werden kann.
Ausführungsform 17: Vorrichtung nach Ausführungsform 16, wobei das Sicherungsband so ausgebildet ist, dass es auch auf derjenigen vertikalen Seite der Tür (2) zwischen der Tür (2) und dem Türrahmen (9) hindurchgeführt werden kann, an der die Tür (2) mittels Türscharnieren (1) an dem Türrahmen (9) befestigt ist.
Ausführungsform 18: Vorrichtung nach einer der vorherigen Ausführungsformen, wobei der zu sichernde Gegenstand (8) auf dem Boden vor der Tür (2) aufgestellt und flexibel ausgebildet ist und wobei das Sicherungsband so ausgebildet ist, dass es auf einer vertikalen Seite der Tür (2) zwischen der Tür (2) und dem Türrahmen (9) hindurchgeführt werden kann, an der die Tür (2) mittels Türscharnieren (1) an dem Türrahmen (9) befestigt ist.
Ausführungsform 19: Vorrichtung nach einer der Ausführungsformen 17-18, wobei das Sicherungsband (6) durch Einführen eines Sicherungsstabs oder -stifts (11) in das Sicherungsband (6) oder durch Befestigen eines Gegenstands am Ende des Sicherungsbands (6) nach erfolgtem Hindurchführen des Sicherungsbands (6) zwischen Tür (2) und Türrahmen (9) fixierbar ist, so dass es bei zugezogener Tür (2) nicht durch den Türspalt gezogen werden kann.
Ausführungsform 20: Vorrichtung nach einer der vorherigen Ausführungsformen, wobei durch die Befestigung weder Tür (2) noch Türrahmen (9) beschädigt werden.
Ausführungsform 21: Vorrichtung nach einer der vorherigen Ausführungsformen, wobei der zu sichernde Gegenstand ein flexibler, nicht starrer Gegenstand ist.
Ausführungsform 22: Vorrichtung nach einer der vorherigen Ausführungsformen, wobei das Sicherungsband (6) an dem zu sichernden Gegenstand (8) nicht abnehmbar fixiert ist, wobei die nicht abnehmbare Fixierung fest oder beweglich ist.
Ausführungsform 23: Vorrichtung nach einer der vorherigen Ausführungsformen, wobei die Länge des Sicherungsbands (6) so bemessen ist, dass es bei Aufstellung des zu sichernden Gegenstands (8) in einer Ecke, die durch die Tür und den scharnierseitigen Türrahmen gebildet wird, gerade noch zwischen der Tür und dem Türrahmen durchgeführt und auf der anderen Seite fixiert werden kann.
Ausführungsform 24: Vorrichtung nach Ausführungsform 23, wobei das Sicherungsband (6) nach der Fixierung auf der anderen Seite auf derjenigen Seite der Tür, auf der sich der zu sichernde Gegenstand befindet, nicht mehr zugänglich ist.
Ausführungsform 25: Verfahren, umfassend:
   - Befestigen eines zu sichernden Gegenstandes (8) an einer Tür- (2) und Türrahmen- (9) Konstruktion mit einer Vorrichtung gemäß einer der vorherigen Ausführungsformen.
Ausführungsform 26: Verfahren nach Ausführungsform 25, umfassend:
   - Fixieren des Sicherungsbands (6) auf der anderen Seite mittels einer um einen Türgriff (10) gelegten Schlinge.
Ausführungsform 27: Verfahren nach Ausführungsform 25, umfassend:
   - Hindurchführen des Sicherungsbands (6), das an einer Seite an dem zu sichernden Gegenstand (8) fixiert ist, zwischen der Tür (2) und dem Türrahmen (9) auf derjenigen vertikalen Seite der Tür (2), an der die Tür mittels Türscharnieren (1) an dem Türrahmen (9) befestigt ist, und
   - Einführen eines Sicherungsstabs oder -stifts (11) in das Sicherungsband (6) oder Befestigen eines Gegenstands am Ende des Sicherungsbands (6) nach erfolgtem Hindurchführen des Sicherungsbands (6) zwischen Tür (2) und Türrahmen (9), so dass es bei zugezogener Tür (2) nicht durch den Türspalt gezogen werden kann.
Ausführungsform 28: Verfahren nach Ausführungsform 27, wobei der zu sichernde Gegenstand (8) auf dem Boden vor der Tür (2) aufgestellt und flexibel ausgebildet ist.
   Weiterhin werden folgende beispielhafte Ausführungsformen der Erfindung offenbart:
Ausführungsform 29: Eine Vorrichtung einer vor Entwendung geschützten zerstörungsfreien Befestigung eines zu sichernden Gegenstandes 8 an einer Tür 2 und Türrahmen 9 Konstruktion oder Fenster und Fensterrahmen Konstruktion um fassend: Mindestens ein Sicherungs-Band 6, welches auf einer Seite an dem zu sichernden Gegenstand fixierbar ist, welches zwischen Tür 2 und Türrahmen 9 hindurchgeführt werden kann, und auf der anderen Seite fixierbar ist.
Ausführungsform 30: Eine Vorrichtung nach Ausführungsform 29, wobei der zusichernde Gegenstand aus Metall, Kunststoff oder Kunstfaser und als Kiste, Box, Regal oder als Auffangvorrichtung ausgeführt ist. Die zusichernden Gegenstände können starr oder flexibel ausgeführt sein.
Ausführungsform 31: Eine Vorrichtung nach Ausführungsform 29, wobei sie mit den folgenden Methoden durch Schrauben, Kleben, Verschweißen, Klammern, Nageln oder direktes Einarbeiten in den Gegenstand an dem zusichernden Gegenstand fixierbar ist, diese Fixierung kann fest, beweglich oder abnehmbar ausgeführt sein, auch können Fixierung Methoden miteinander gleichzeitig kombiniert werden.
Ausführungsform 32: Eine Vorrichtung nach Ausführungsform 29, wobei das Sicherungsband aus flexiblem, reißfesten Faserband oder Gewebeband ausgeführt ist, möglich wären auch reißfeste Folien oder flache Werkstoffe aus Kunststoff, Metall oder Verbundwerkstoff oder als dünne flexible oder starre Sicherungskabel aus Kunststoff, Metall oder Verbundwerkstoff.
Ausführungsform 33:Eine Vorrichtung nach Ausführungsform 29, wobei das Sicherungsband so fixiert ist, dass es bei zugezogener Tür nicht durch den Türspalt gezogen werden kann, mit einem Sicherungsstift oder einer Schlinge, welche z.B. um einen Türgriff 10 gelegt werden kann fixierbar ist, möglich wäre auch, dass statt des Sicherungsstifts ein anderer Gegenstand fixiert am Ende des Bandes durch Schrauben, Kleben, Verdicken, Verschweißen, Klammern, Nageln, direktes Einarbeiten eines Gegenstands oder Anbringen z.B. von Haken, so dass es nicht möglich ist, bei zugezogener Tür durch den Türspalt gezogen werden kann.

## Patentansprüche

1. System, umfassend:
- einen zu sichernden Gegenstand (8), der flexibel, also nicht starr ausgebildet ist, und
- eine Vorrichtung einer vor Entwendung geschützten zerstörungsfreien Befestigung des zu sichernden Gegenstandes (8) durch werkzeuglose Montage an einer Tür- (2) und Türrahmen- (9) Konstruktion, wobei die Vorrichtung mindestens ein flexibles Sicherungsband (6) umfasst, welches dergestalt ausgebildet ist, dass es auf einer Seite an dem zu sichernden Gegenstand (8) fixierbar oder fixiert ist, dass es zwischen Tür (2) und Türrahmen (9) hindurchgeführt werden kann und dass es auf der anderen Seite dergestalt fixierbar ist, dass es bei zugezogener Tür nicht durch den Türspalt gezogen und der zu sichernde Gegenstand (8) somit nicht entfernt werden kann.

2. System nach Anspruch 1, wobei das Sicherungsband (6) derart ausgebildet ist, dass sich, wenn der zu sichernde Gegenstand (8) auf dem Boden vor der Tür (2) positioniert, das Sicherungsband (6) an der einen Seite an dem zu sichernden Gegenstand (8) fixiert, das Sicherungsband (6) zwischen Tür (2) und Türrahmen (9) hindurchgeführt und die Tür (2) zugezogen ist, ein Teil des Sicherungsbands (6) zwischen der einen Seite und der anderen Seite des Sicherungsbands (6) an einer vertikalen Seite der Tür (2) im Türspalt zwischen Tür (2) und Türrahmen (9) befinden kann.

3. System nach einem der vorherigen Ansprüche, wobei das Sicherungsband so ausgebildet ist, dass es auf derjenigen vertikalen Seite der Tür (2) zwischen der Tür (2) und dem Türrahmen (9) hindurchgeführt werden kann, an der die Tür (2) mittels Türscharnieren (1) an dem Türrahmen (9) befestigt ist.

4. System nach einem der vorherigen Ansprüche, wobei der zu sichernde Gegenstand (8) aus Metall, Kunststoff oder Kunstfaser und als Kiste, Box, Regal oder als Auffangvorrichtung ausgeführt und/oder abschließbar ist.

5. System nach einem der vorherigen Ansprüche, wobei das Sicherungsband (6) durch Schrauben, Kleben, Verschweißen, Klammern, Nageln und/oder direktes Einarbeiten in den zu sichernden Gegenstand (8) an dem zu sichernden Gegenstand (8) fixiert ist.

6. System nach einem der vorherigen Ansprüche, wobei das Sicherungsband (6) als flexibles Metallband, als vorgeformtes Metall als Kunststoffteil, als Folie, als flexibles, reißfestes Faserband oder Gewebeband, als reißfeste Folie, als flacher Werkstoff aus Kunststoff, Metall oder Verbundwerkstoff, oder als dünnes flexibles oder starres Sicherungskabel aus Kunststoff, Metall oder Verbundwerkstoff ausgeführt ist.

7. System nach einem der vorherigen Ansprüche, wobei das Sicherungsband (6) mit einem Sicherungsstab oder -stift (11), einer Schlinge, einem am Ende des Sicherungsbands (6) befestigbaren Gegenstand oder aufgrund eines verdickten Endes des Sicherungsbands (6) auf der anderen Seite fixierbar ist, so dass es bei zugezogener Tür nicht durch den Türspalt gezogen werden kann.

8. System nach Anspruch 7,
wobei der Sicherungsstab oder -stift (11), der am Ende des Sicherungsbands (6) befestigbare Gegenstand oder das verdickte Ende des Sicherungsbands (6) dicker sind als der Türspalt, und/oder
wobei die Schlinge um einen Türgriff (10) gelegt werden kann, und/oder wobei der Gegenstand am Ende des Sicherungsbands (6) durch Schrauben, Kleben, Verdicken, Verschweißen, Klammern, Nageln, direktes Einarbeiten eines Gegenstands oder Anbringen von Haken befestigt ist, und/oder wobei der Sicherungsstab oder -stift (11) in das Sicherungsband (6) einführbar ist, und/oder
wobei das Sicherungsband (6) durch Einführen des Sicherungsstabs oder -stifts (11) in das Sicherungsband (6) oder durch Befestigen des Gegenstands am Ende des Sicherungsbands (6) nach erfolgtem Hindurchführen des Sicherungsbands (6) zwischen Tür (2) und Türrahmen (9) fixierbar ist, so dass es bei zugezogener Tür (2) nicht durch den Türspalt gezogen werden kann.

9. System nach einem der vorherigen Ansprüche, wobei das Sicherungsband (6) an dem zu sichernden Gegenstand (8) nicht abnehmbar fixiert ist, wobei die nicht abnehmbare Fixierung fest oder beweglich ist.

10. System nach einem der vorherigen Ansprüche, wobei die Länge des Sicherungsbands (6) so bemessen ist, dass es, wenn es an dem zu sichernden Gegenstand (8) fixiert ist, bei Aufstellung des zu sichernden Gegenstands (8) in einer Ecke, die durch die Tür und den insbesondere scharnierseitigen Türrahmen gebildet wird, gerade noch zwischen der Tür (2) und dem Türrahmen (9) durchgeführt und auf der anderen Seite fixiert werden kann, insbesondere dergestalt, dass das Sicherungsband (6) nach der Fixierung auf der anderen Seite auf derjenigen Seite der Tür, auf der sich der zu sichernde Gegenstand befindet, nicht mehr zugänglich ist.

11. Verfahren, umfassend:
- Befestigen eines zu sichernden Gegenstandes (8), der flexibel, also nicht starr ausgebildet ist, an einer Tür- (2) und Türrahmen- (9) Konstruktion durch werkzeuglose Montage mit einer Vorrichtung, die mindestens ein flexibles Sicherungsband (6) umfasst, das auf einer Seite an dem zu sichernden Gegenstand (8) fixierbar oder fixiert ist, das Befestigen umfassend:
- Hindurchführen des Sicherungsbands (6) zwischen Tür (2) und Türrahmen (9), und
- Zuziehen der Tür,
wobei das Sicherungsband (6) auf der anderen Seite dergestalt fixiert ist, dass es bei zugezogener Tür nicht durch den Türspalt gezogen und der zu sichernde Gegenstand (8) somit nicht entfernt werden kann.

12. Verfahren nach Anspruch 11, wobei das Sicherungsband (6) dadurch auf der anderen Seite fixiert ist, dass ein Sicherungsstab oder -stift (11) in das Sicherungsband (6) eingeführt ist, eine Schlinge um einen Türgriff (10) gelegt ist oder ein Gegenstand am Ende des Sicherungsbands (6) befestigt ist oder ein verdicktes Ende des Sicherungsbands, das dicker ist als der Türspalt, zwischen Tür (2) und Türrahmen hindurchgeführt worden ist, so dass es bei zugezogener Tür nicht durch den Türspalt gezogen werden kann.

13. Verfahren nach einem der Ansprüche 11-12, wobei das Sicherungsband (6) an einer vertikalen Seite der Tür (2), insbesondere auf derjenigen vertikalen Seite, an der die Tür (2) mittels Türscharnieren (1) an dem Türrahmen (9) befestigt ist, zwischen Tür (2) und Türrahmen (9) hindurchgeführt wird und sich nach dem Zuziehen der Tür (2) ein Teil des Sicherungsbands (6) zwischen der einen Seite und der anderen Seite des Sicherungsbands (6) an dieser vertikalen Seite der Tür (2) im Türspalt zwischen Tür (2) und Türrahmen (9) befindet.

14. Verfahren nach einem der Ansprüche 11-13, wobei die Länge des Sicherungsbands (6) so bemessen ist, dass es, wenn es an dem zu sichernden Gegenstand (8) fixiert ist, bei Aufstellung des zu sichernden Gegenstands (8) in einer Ecke, die durch die Tür und den insbesondere scharnierseitigen Türrahmen gebildet wird, gerade noch zwischen der Tür (2) und dem Türrahmen (9) durchgeführt und auf der anderen Seite fixiert werden kann, insbesondere dergestalt, dass das Sicherungsband (6) nach der Fixierung auf der anderen Seite auf derjenigen Seite der Tür, auf der sich der zu sichernde Gegenstand befindet, nicht mehr zugänglich ist.

15. Verfahren nach einem der Ansprüche 11-14, wobei das Sicherungsband (6) flexibel und/oder als flexibles Metallband, als vorgeformtes Metall als Kunststoffteil, als Folie, als flexibles, reißfestes Faserband oder Gewebeband, als reißfeste Folie, als flacher Werkstoff aus Kunststoff, Metall oder Verbundwerkstoff, oder als dünnes flexibles oder starres Sicherungskabel aus Kunststoff, Metall oder Verbundwerkstoff ausgeführt ist.

## Claims

1. A system comprising:
- an object (8) to be secured which is configured to be flexible, i.e. not rigid, and
- a device for non-damagingly fastening to a door (2) and door frame (9) structure the object (8) to be secured, by mounting without the use of tools, in such a way that the object is protected from being stolen, wherein the device comprises at least one flexible securing strip (6) which is configured such that it is able to be fixed or is fixed to the object (8) to be secured on one side, such that it may be guided between the door (2) and door frame (9), and such that it is able to be fixed on the other side such that when the door is pulled closed said securing strip may not be pulled through the door gap and the object (8) to be secured thus may not be removed.

2. The system according to Claim 1, wherein the securing strip (6) is configured such that when the object (8) to be secured is positioned on the floor in front of the door (2), the securing strip (6) is fixed to the object (8) to be secured on the one side, the securing strip (6) is guided between the door (2) and the door frame (9) and the door (2) is pulled closed, a part of the securing strip (6) between the one side and the other side of the securing strip (6) may be located on a vertical side of the door (2) in the door gap between the door (2) and door frame (9).

3. The system according to one of the preceding claims, wherein the securing strip is configured such that it may be guided between the door (2) and the door frame (9) on the vertical side of the door (2) on which the door (2) is fastened by means of door hinges (1) to the door frame (9).

4. The system according to one of the preceding claims, wherein the object (8) to be secured is designed from metal, plastics or synthetic fibres and as a case, box, shelf or as a collection device and/or is able to be locked.

5. The system according to one of the preceding claims, wherein the securing strip (6) is fixed to the object (8) to be secured, by screwing, bonding, welding, clamping, nailing and/or direct incorporation into the object (8) to be secured.

6. The system according to one of the preceding claims, wherein the securing strip (6) is designed as a flexible metal strip, as preformed metal, as a plastics part, as a film, as a flexible tear-resistant fibre strip or woven strip, as a tear-resistant film, as a planar material made of plastics, metal or composite material, or as a thin, flexible or rigid security cable made of plastics, metal or composite material.

7. The system according to one of the preceding claims, wherein the securing strip (6) is able to be fixed on the other side by a securing bar or pin (11), a loop, an object which is able to be fastened to the end of the securing strip (6) or due to a thickened end of the securing strip (6), such that when the door is pulled closed said securing strip may not be pulled through the door gap.

8. The system according to Claim 7, wherein the securing bar or pin (11), the object which is able to be fastened to the end of the securing strip (6) or the thickened end of the securing strip (6) are thicker than the door gap and/or
wherein the loop may be placed around a door handle (10) and/or wherein the object is fastened to the end of the securing strip (6) by screwing, bonding, thickening, welding, clamping, nailing, direct incorporation of an object or the attaching of hooks and/or wherein the securing bar or pin (11) is able to be introduced into the securing strip (6) and/or
wherein by inserting the securing bar or pin (11) into the securing strip (6) or by fastening the object to the end of the securing strip (6) after the securing strip (6) has been guided between the door (2) and door frame (9), the securing strip (6) is able to be fixed such that when the door (2) is pulled closed said securing strip may not be pulled through the door gap.

9. The system according to one of the preceding claims, wherein the securing strip (6) is fixed in a non-removable manner to the object (8) to be secured, wherein the non-removable fixing is fixed or movable.

10. The system according to one of the preceding claims, wherein the length of the securing strip (6) is dimensioned such that when it is fixed to the object (8) to be secured, when installing the object (8) to be secured in a corner which is formed by the door and the door frame, in particular on the hinge side, said securing strip may only just be guided between the door (2) and the door frame (9) and may be fixed on the other side, in particular such that after the fixing on the other side the securing strip (6) is no longer accessible on the side of the door on which the object to be secured is located.

11. A method comprising:
- fastening an object (8) to be secured which is configured to be flexible, i.e. not rigid, to a door (2) and door frame (9) structure by mounting without the use of tools, by means of an apparatus which comprises at least one flexible securing strip (6) which is able to be fixed or is fixed on one side to the object (8) to be secured, the fastening comprising:
- guiding the securing strip (6) between the door (2) and door frame (9), and
- pulling the door closed,
wherein the securing strip (6) is fixed on the other side such that when the door is pulled closed said securing strip may not be pulled through the door gap and the object (8) to be secured thus may not be removed.

12. The method according to Claim 11, wherein the securing strip (6) is fixed on the other side by a securing bar or pin (11) being inserted into the securing strip (6), a loop being placed around a door handle (10) or an object being fastened to the end of the securing strip (6) or a thickened end of the securing strip which is thicker than the door gap having been guided between the door (2) and door frame, such that when the door is pulled closed said securing strip may not be pulled through the door gap.

13. The method according to one of Claims 11 - 12, wherein on a vertical side of the door (2), in particular on the vertical side on which the door (2) is fastened by means of door hinges (1) to the door frame (9), the securing strip (6) is guided between the door (2) and door frame (9) and after pulling the door closed (2) a part of the securing strip (6) between the one side and the other side of the securing strip (6) is located on this vertical side of the door (2) in the door gap between the door (2) and door frame (9).

14. The method according to one of Claims 11 - 13, wherein the length of the securing strip (6) is dimensioned such that when it is fixed to the object (8) to be secured, when installing the object (8) to be secured in a corner which is formed by the door and the door frame, in particular on the hinge side, said securing strip may be only just guided between the door (2) and the door frame (9) and may be fixed on the other side, in particular such that after the fixing on the other side, the securing strip (6) is no longer accessible on the side of the door on which the object to be secured is located.

15. The method according to one of Claims 11 - 14, wherein the securing strip (6) is designed to be flexible and/or as a flexible metal strip, as preformed metal, as a plastics part, as a film, as a flexible tear-resistant fibre strip or woven strip, as a tear-resistant film, as a planar material made of plastics, metal or composite material, or as a thin, flexible or rigid security cable made of plastics, metal or composite material.

## Revendications

1. Système comprenant :
- un objet (8) à sécuriser, qui est réalisé de manière flexible, donc de manière non rigide, et
- un dispositif pour une fixation sans destruction, protégée contre toute subtilisation, de l'objet (8) à sécuriser par un montage sans outil au niveau d'une structure de porte (2) ou de cadre de porte (9), dans lequel le dispositif comprend au moins une bande de sécurisation (6) flexible, laquelle est réalisée de telle manière qu'elle peut être bloquée ou est bloquée sur un côté au niveau de l'objet (8) à sécuriser, qu'elle peut être guidée de part en part entre la porte (2) et le cadre de porte (9) et qu'elle peut être bloquée de telle manière, sur l'autre côté, qu'elle ne peut être tirée à travers l'entrebâillement de porte lorsque la porte est fermée et l'objet (8) à sécuriser ne peut être ainsi retiré.

2. Système selon la revendication 1, dans lequel la bande de sécurisation (6) est réalisée de telle manière que, lorsque l'objet (8) à sécuriser est positionné sur le sol devant la porte (2), la bande de sécurisation (6) se bloque au niveau d'un côté au niveau de l'objet (8) à sécuriser, la bande de sécurisation (6) est guidée de part en part entre la porte (2) et le cadre de porte (9) et la porte (2) est fermée, une partie de la bande de sécurisation (6) peut se trouver entre un côté et l'autre côté de la bande de sécurisation (6) au niveau d'un côté vertical de la porte (2) dans l'entrebâillement de porte entre la porte (2) et le cadre de porte (9).

3. Système selon l'une quelconque des revendications précédentes, dans lequel la bande de sécurisation est réalisée de telle sorte qu'elle peut être guidée de part en part entre la porte (2) et le cadre de porte (9) sur le côté vertical de la porte (2), au niveau duquel la porte (2) est fixée au cadre de porte (9) au moyen de charnières de porte (1).

4. Système selon l'une quelconque des revendications précédentes, dans lequel l'objet (8) à sécuriser est réalisé à partir de métal, de matière plastique ou de fibres synthétiques et sous la forme d'une caisse, d'une boîte, d'un rayonnage ou sous la forme d'un dispositif de collecte et/ou peut être fermé.

5. Système selon l'une quelconque des revendications précédentes, dans lequel la bande de sécurisation (6) est bloquée au niveau de l'objet (8) à sécuriser par vissage, collage, soudage, agrafage, cloutage et/ou intégration directe dans l'objet (8) à sécuriser.

6. Système selon l'une quelconque des revendications précédentes, dans lequel la bande de sécurisation (6) est réalisée sous la forme d'une bande métallique flexible, sous la forme d'un métal préalablement façonné en tant qu'élément en matière plastique, sous la forme d'un film, sous la forme d'une bande de fibres ou d'une bande en tissu flexible, résistante au déchirement, sous la forme d'un film résistant au déchirement, sous la forme d'un matériau plat en matière plastique, en métal ou en matériau composite, ou sous la forme d'un câble de sécurisation fin flexible ou rigide en matière plastique, en métal ou en matériau composite.

7. Système selon l'une quelconque des revendications précédentes, dans lequel la bande de sécurisation (6) peut être bloquée avec une barre ou une tige de sécurisation (11), une boucle, un objet pouvant être fixé à l'extrémité de la bande de sécurisation (6) ou du fait d'une extrémité épaissie de la bande de sécurisation (6) sur l'autre côté de sorte qu'elle ne puisse pas être tirée à travers l'entrebâillement de porte lorsque la porte est fermée.

8. Système selon la revendication 7,
dans lequel la barre ou la tige de sécurisation (11), l'objet pouvant être fixé à l'extrémité de la bande de sécurisation (6) ou l'extrémité épaissie de la bande de sécurisation (6) sont plus épais que l'entrebâillement de porte, et/ou
dans lequel la boucle peut être placée autour d'une poignée de porte (10), et/ou
dans lequel l'objet est fixé à l'extrémité de la bande de sécurisation (6) par vissage, collage, épaississement, soudage, agrafage, cloutage, insertion directe d'un objet ou installation de crochets, et/ou
dans lequel la barre ou la tige de sécurisation (11) peut être introduite dans la bande de sécurisation (6), et/ou
dans lequel la bande de sécurisation (6) peut être bloquée, après que la bande de sécurisation (6) a été guidée de part en part avec succès entre la porte (2) et le cadre de porte (9), par l'introduction de la barre ou de la tige de sécurisation (11) dans la bande de sécurisation (6) ou par la fixation de l'objet au niveau de l'extrémité de la bande de sécurisation (6) de sorte qu'elle ne puisse pas être tirée à travers l'entrebâillement de porte lorsque la porte (2) est fermée.

9. Système selon l'une quelconque des revendications précédentes, dans lequel la bande de sécurisation (6) est bloquée de manière inamovible au niveau de l'objet (8) à sécuriser, dans lequel le blocage inamovible est solidaire ou mobile.

10. Système selon l'une quelconque des revendications précédentes, dans lequel la longueur de la bande de sécurisation (6) est telle que, quand elle est bloquée au niveau de l'objet à sécuriser (8), lors du placement de l'objet (8) à sécuriser dans un angle, qui est formé par la porte et le cadre de porte en particulier côté charnière, elle peut être passée encore entre la porte (2) et le cadre de porte (9) et peut être bloquée sur l'autre côté, en particulier de telle manière que la bande de sécurisation (6) n'est plus accessible, après le blocage sur l'autre côté, sur le côté de la porte, sur lequel l'objet à sécuriser se trouve.

11. Procédé comprenant :
- la fixation d'un objet (8) à sécuriser, qui est réalisé de manière flexible, donc de manière non rigide, au niveau d'une structure de porte (2) ou de cadre de porte (9) par un montage sans outil avec un dispositif, qui comprend au moins une bande de sécurisation (6) flexible, qui peut être bloquée ou est bloquée sur un côté au niveau de l'objet (8) à sécuriser, la fixation comprenant :
- le guidage de part en part de la bande de sécurisation (6) entre la porte (2) et le cadre de porte (9), et
- la fermeture de la porte,
dans lequel la bande de sécurisation (6) est bloquée sur l'autre côté de telle manière qu'elle ne peut pas être tirée à travers l'entrebâillement de porte lorsque la porte est fermée et l'objet (8) à sécuriser ne peut ainsi pas être retiré.

12. Procédé selon la revendication 11, dans lequel la bande de sécurisation (6) est de ce fait bloquée sur l'autre côté, qu'une barre ou tige de sécurisation (11) est introduite dans la bande de sécurisation (6), une boucle est placée autour d'une poignée de porte (10) ou un objet est fixé à l'extrémité de la bande de sécurisation (6) ou une extrémité épaissie de la bande de sécurisation, qui est plus épaisse que l'entrebâillement de porte, a été guidée de part en part entre la porte (2) et le cadre de porte de sorte qu'elle ne puisse pas être tirée à travers l'entrebâillement de porte lorsque la porte est fermée.

13. Procédé selon l'une quelconque des revendications 11 à 12, dans lequel la bande de sécurisation (6) est fixée au niveau d'un côté vertical de la porte (2), en particulier sur le côté vertical, au niveau duquel la porte (2) est fixée au cadre de porte (9) au moyen de charnières de porte (1), est guidée de part en part entre la porte (2) et le cadre de porte (9), et après la fermeture de la porte (2), une partie de la bande de sécurisation (6) se trouve entre un côté et l'autre côté de la bande de sécurisation (6) au niveau dudit côté vertical de la porte (2) dans l'entrebâillement de porte entre la porte (2) et le cadre de porte (9).

14. Procédé selon l'une quelconque des revendications 11 à 13, dans lequel la longueur de la bande de sécurisation (6) est telle que, quand elle est bloquée au niveau de l'objet (8) à sécuriser, lors du placement de l'objet (8) à sécuriser dans un angle, qui est formé par la porte et le cadre de porte en particulier côté charnière, elle peut être passée encore entre la porte (2) et le cadre de porte (9) et peut être bloquée sur l'autre côté, en particulier de telle manière que la bande de sécurisation (6) n'est plus accessible, après le blocage sur l'autre côté, sur le côté de la porte, sur lequel l'objet à sécuriser se trouve.

15. Procédé selon l'une quelconque des revendications 11 à 14, dans lequel la bande de sécurisation (6) est réalisée de manière flexible et/ou sous la forme d'une bande métallique flexible, sous la forme d'un métal préalablement façonné en tant qu'élément en matière plastique, sous la forme d'un film, sous la forme d'une bande de fibres ou d'une bande de tissu flexible, résistante au déchirement, sous la forme d'un film résistant au déchirement, sous la forme d'un matériau plat en matière plastique, en métal ou en matériau composite, ou sous la forme d'un câble de sécurisation fin flexible ou rigide en matière plastique, en métal ou en matériau composite.
